# EUROPEAN PATENT APPLICATION

(11) **EP 4 199 143 A1**
(43) Date of publication of application: **21.06.2023**
(21) Application number: 21855634.8
(22) Date of filing: 13.08.2021
(51) Int. Cl.: H01M 4/36, H01M 4/505, H01M 4/525, H01M 10/0525

(54) **MIXED POSITIVE ELECTRODE MATERIAL, POSITIVE ELECTRODE PLATE AND MANUFACTURING METHOD THEREFOR, AND BATTERY**

(30) Priority: 14.08.2020 CN 202010820196
(71) Applicant: BYD Company Limited, Shenzhen, Guangdong 518118 (CN)
(72) Inventor: CHEN, Na, Shenzhen, Guangdong 518118 (CN); TIAN, Yecheng, Shenzhen, Guangdong 518118 (CN); CHEN, Sanzhi, Shenzhen, Guangdong 518118 (CN); HAO, Rong, Shenzhen, Guangdong 518118 (CN); PAN, Yi, Shenzhen, Guangdong 518118 (CN)
(74) Representative: DehnsGermany Partnerschaft von Patentanwälten
(86) International application number: PCT/CN2021/112541
(87) International publication number: WO 2022/033584

(57) **Abstract**

Disclosed are a mixed positive electrode material, a positive electrode plate and a manufacturing method therefor, and a battery. The mixed positive electrode material includes: a ternary material and a phase change material, where the phase change material undergoes a phase change in a charging/discharging voltage range of the ternary material, the ternary material has a single crystal structure, and the phase change material has a single crystal structure or an aggregate structure; a mass fraction ratio of the ternary material to the phase change material is 70:30 to 99.8:0.2; and the ternary material has a nanohardness of 0.001-5 Gpa, and the phase change material has a nanohardness of 0.01-10 GPa.

## Description

### CROSS-REFERENCE TO RELATED APPLICATIONS

The present disclosure claims priority to Chinese Patent Application No. 202010820196.4, entitled "MIXED POSITIVE ELECTRODE MATERIAL, POSITIVE ELECTRODE PLATE AND MANUFACTURING METHOD THEREFOR, AND BATTERY" filed on August 14, 2020, which is incorporated herein by reference in its entirety.

### FIELD

The present disclosure relates to the technical field of batteries, and specifically to a mixed positive electrode material, a positive electrode plate and a manufacturing method therefor, and a battery.

### BACKGROUND

Ternary materials are widely used as positive electrode materials for electric vehicle batteries due to their high energy density. In addition, with the increasing energy density requirements for electric vehicles, the ternary materials used have changed from LiNi_{1/3}Co_{1/3}Mn_{1/3}O₂ to LiNi_{0.5}Co_{0.2}Mn_{0.3}O₂, and even many ternary material companies have started to develop LiNi_{0.6}Co_{0.2}Mn_{0.2}O₂, LiNi_{0.8}Co_{0.1}Mn_{0.1}O₂, LiNiO₂, NCAand other ternary high-nickel materials.

However, the ternary high-nickel materials have problems such as poor cycle performance at room temperature, increased DCIR (DC resistance at a specific load and discharge current) after cycling, serious gas production after cycling, and poor safety performance. To solve the above problems of the ternary high-nickel materials, the currently available technical solution is to improve the structural stability of the ternary high-nickel materials as much as possible, slow down the capacity decrease caused by the phase change of the ternary high-nickel materials during long-term cycling, and improve the safety performance of the ternary high-nickel materials, by optimization of coating, doping, and sintering processes. However, the above technical solution cannot essentially solve the problem of phase change of the ternary high-nickel materials in a fixed charging/discharging range, but only improves the structural stability of the ternary high-nickel materials.

### SUMMARY

To resolve at least one of the above technical problems, the present disclosure is provided. Specifically, in one aspect of the present disclosure, a mixed positive electrode material is provided, which includes:
a ternary material and a phase change material. The phase change material undergoes a phase change in a charging/discharging voltage range of the ternary material. The ternary material has a single crystal structure. The phase change material has a single crystal structure or an aggregate structure.

Amass fraction ratio of the ternary material to the phase change material is 70:30 to 99.8:0.2.

The ternary material has a nanohardness of 0.001-5 Gpa, and the phase change material has a nanohardness of 0.01-10 GPa.

The ternary material has a D50 of 3.0-6.0 µm, and primary particles in the phase change material have a D50 of 10-50 nm.

In an embodiment of the present disclosure, the ternary material has a nanohardness of 0.2-1.4 Gpa, and the phase change material has a nanohardness of 1.5-3.5 GPa.

In an embodiment of the present disclosure, the ternary material has a tap density of 2.0-2.8 g/cm³, and the phase change material has a tap density of 0.8-1.5 g/cm³.

In an embodiment of the present disclosure, the ternary material has D50 of 3.5-5.0 µm, and the primary particles in the phase change material have D50 of 20-40 nm.

In an embodiment of the present disclosure, the ternary material has a chemical formula of LiNiₓCo_{y}M_{z}, where x+y+z=1, and M includes Mn, Al, Zr, Ti, Y, Sr or W.

In an embodiment of the present disclosure, the ternary material includes a nickel-cobalt-manganese ternary material or a nickel-cobalt-aluminum ternary material.

In an embodiment of the present disclosure, the phase change material has an olivine structure, and the phase change material has a chemical formula of LiAₓB_{y}PO₄, where x+y=1, A includes Fe, Co, Mn, Ni, Cr or V, and B includes Fe, Co, Mn, Ni, Cr or V.

In an embodiment of the present disclosure, the phase change material includes lithium manganese iron phosphate, lithium manganese vanadium phosphate, or lithium chromium iron phosphate.

In another aspect of the present disclosure, a positive electrode plate is provided, which includes a current collector and the mixed positive electrode material described above provided on the current collector.

In an embodiment of the present disclosure, an intensity ratio of peak 003 to peak 110 in an XRD pattern after compaction of the positive electrode plate is 10 to 100.

In another aspect of the present disclosure, a manufacturing method for the positive electrode plate described above is provided, which includes:
NMP is mixed with a binder, a conductive agent, and an NMP slurry to obtain a final slurry. The NMP slurry includes a phase change material, a dispersant, a stabilizer, and NMP. The phase change material undergoes a phase change in a charging/discharging voltage range of the ternary material. The ternary material has a nanohardness of 0.001-5 Gpa. The phase change material has a nanohardness of 0.01-10 GPa. The ternary material has a D50 of 3.0-6.0 µm. Primary particles in the phase change material have a D50 of 10-50 nm.

The final slurry is coated onto a current collector. The NMP in the final slurry is removed by high-temperature baking, rolling, and slicing to obtain the positive electrode plate.

In an embodiment of the present disclosure, a solid content of the NMP slurry is 30-40 wt%.

In an embodiment of the present disclosure, the ternary material has a nanohardness of 0.2-1.4 Gpa, and the phase change material has a nanohardness of 1.5-3.5 GPa.

In an embodiment of the present disclosure, the ternary material has a tap density of 2.0-2.8 g/cm³, and the phase change material has a tap density of 0.8-1.5 g/cm³.

In an embodiment of the present disclosure, the ternary material has a D50 of 3.5-5.0 µm, and the primary particles in the phase change material have a D50 of 20-40 nm.

In an embodiment of the present disclosure, the NMP solvent, the PVDF, the conductive agent material, and the NMP slurry are mixed with lithium carbonate to obtain the final slurry.

In still another aspect of the present disclosure, a battery is provided, which includes the positive electrode plate described above, a negative electrode plate, and a separator provided between the positive electrode plate and the negative electrode plate and an electrolyte solution.

According to the mixed positive electrode material, the positive electrode plate and the manufacturing method therefor, and the battery proposed in the present disclosure, the positive electrode material includes a ternary material and a phase change material, and the ternary material has a single crystal structure. On the one hand, the ternary material of the single crystal structure has advantages of good high-temperature performance, less gas production and high safety. On the other hand, by adding the phase change material, the phase change of the ternary material in the charging/discharging range can be slowed down or delayed and the capacity decrease caused by the phase change of the ternary material during long-term cycling can be slowed down, thereby improving the cycle performance of the battery, reducing the impedance of the ternary material during aging, and improving the safety performance of the battery.

Further, in the embodiments of the present disclosure, the orientation of the mixed positive electrode material in the direction of 003 crystallographic orientation is restricted by defining the nanohardness of the ternary material and that of the phase change material, and a relatively high compaction density of the electrode plate is achieved by defining the tap densities of the ternary material and the phase change material, thereby ensuring the energy density of the battery.

In yet another aspect of the present disclosure, a mixed positive electrode material is provided, which includes:
a ternary material and a phase change material. The phase change material has a phase change stage in a charging/discharging range of the ternary material. The ternary material has a single crystal structure. The phase change material has a single crystal structure or an aggregate structure.

A mass fraction ratio of the ternary material to the phase change material is 70:30 to 99.8:0.2.

The ternary material has a nanohardness of 0.001-5 Gpa, and the phase change material has a nanohardness of 0.01-10 GPa.

The ternary material has a D50 of 3.0-6.0 µm, and primary particles in the phase change material have a D50 of 10-50 nm.

In another aspect of the present disclosure, a manufacturing method for the positive electrode plate described above is provided, which includes:
PVDF is added to a particular amount of NMP solvent to form a PVDF solution. The PVDF has a polymer chain with an F-containing group and/or a carboxyl group, an ester group, or an amino group.

A particular amount of NMP slurry is added to the PVDF solution, and then fully stirred on a vacuum high-speed dosing device for a particular period of time to form a uniform slurry.

A conductive agent material is added to the slurry.

After a particular period of time, a ternary material is added to the slurry and fully stirred to obtain a final slurry.

The final slurry is coated onto a current collector. The solvent in the slurry is then removed by high-temperature baking, and rolling and slicing are performed to obtain the positive electrode plate.

The NMP slurry includes a phase change material, a dispersant, and a stabilizer. The phase change material has a phase change stage in the charging/discharging range of the ternary material.

The ternary material has a nanohardness of 0.001-5 Gpa. The phase change material has a nanohardness of 0.01-10 GPa. The ternary material has a D50 of 3.0-6.0 µm. Primary particles in the phase change material have a particle size D50 of 10-50 nm.

Additional aspects and advantages of the present disclosure are to be partially provided in the following description, and partially become evident in the following description, or understood through the practice of the present disclosure.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 shows CV curves of a conventional ternary material and a mixed positive electrode material according to an embodiment of the present disclosure;
FIG. 2 is a partially enlarged view of the CV curves shown in FIG. 1;
FIG. 3 shows the orientations of a ternary material and a mixed positive electrode material according to an embodiment of the present disclosure in the 003 crystallographic orientation;
FIG. 4 shows XRD patterns of a conventional ternary material and a mixed positive electrode material according to an embodiment of the present disclosure after electrode plate compaction;
FIG. 5 is a schematic flowchart of a manufacturing method for a positive electrode plate according to an embodiment of the present disclosure; and
FIG. 6 is a schematic flowchart of step 100 of a manufacturing method for a positive electrode plate according to an embodiment of the present disclosure.

### DETAILED DESCRIPTION

In the following description, numerous specific details are given to facilitate a more thorough understanding of the present disclosure. However, it is obvious to those skilled in the art that the present disclosure can be implemented without one or more of these details. In other examples, to avoid confusion with the present disclosure, some technical features known in the art are not described

It should be understood that the present disclosure can be implemented in different forms and should not be construed as being limited to the embodiments presented herein. Conversely, these embodiments are provided for the purpose of making the disclosure thorough and complete, and conveying the scope of the present disclosure fully to those skilled in the art. In the accompanying drawings, for the sake of clarity, the sizes and relative sizes of layers and regions may be exaggerated, and the same reference numerals denote the same elements throughout the present disclosure.

The terms used herein are merely for the purpose of describing specific embodiments and not as a limitation of the present disclosure. When used herein, the singular forms "a", "an" and "the" are also meant to include the plural form, unless otherwise clearly indicated. It should also be understood that the terms "consisting of" and/or "including", when used in this specification, confirm the existence of the described features, integers, steps, operations, elements and/or components, but do not exclude the existence or addition of one or more other features, integers, steps, operations, elements, components and/or groups. As used herein, the term "and/or" includes any and all combinations of related listed items.

For the purpose of thorough understanding of the present disclosure, a detailed structure is to be presented in the following description to help explain the technical solution proposed in the present disclosure. Optional embodiments of the present disclosure are described in detail as follows. However, besides these detailed descriptions, the present disclosure may also have other implementations.

As described above, the ternary high-nickel materials have problems such as poor cycle performance at room temperature, increased DCIR (DC resistance at a specific load and discharge current) after cycling, serious gas production after cycling, and poor safety performance. To solve the above problems of the ternary high-nickel materials, the currently available technical solution is to improve the structural stability of the ternary high-nickel materials as much as possible, slow down the capacity decrease caused by the phase change of the ternary high-nickel materials during long-term cycling, and improve the safety performance of the ternary high-nickel materials, by optimization of coating, doping, and sintering processes. However, the above technical solution cannot essentially solve the problem of phase change of the ternary high-nickel materials in a fixed charging/discharging range, but only improves the structural stability of the ternary high-nickel materials. Based on this, the present disclosure is to improve the cycling and safety performance of the ternary high-nickel material on the basis of the improvement of the stability of the ternary high-nickel material from the perspective of electrode plate design and battery design, to overcome the current problems.

The idea of the present disclosure is to add additives for improving cycle and safety performance to the ternary material slurry on the basis of improving the structural stability of the body material, and to improve the cycle and safety performance of the ternary material in terms of electrode plate design. The general idea is to share more charging and discharging tasks on a charging/discharging stage of a ternary high-nickel material of about 4.25 V (relative to the potential of Li) and slow down or delay the phase change in the charging/discharging voltage range of the ternary high-nickel material by taking advantage of the charging and discharging characteristics of different ternary high-nickel materials.

A mixed positive electrode material proposed in the present disclosure includes a ternary material and a phase change material. The phase change material undergoes a phase change in a charging/discharging voltage range of the ternary material. By means of the phase change material, the phase change of the ternary material in the charging/discharging voltage range can be slowed down or delayed and the capacity decrease caused by the phase change of the ternary material during long-term cycling can be slowed down, thereby improving the cycle performance of the battery, reducing the impedance of the ternary material during aging, and improving the safety performance of the battery.

Exemplarily, a mass ratio of the ternary material to the phase change material is 70:30 to 99.8:0.2. For example, the mass ratio of the ternary material to the phase change material is 90: 10 to 95:5.

Exemplarily, in an embodiment of the present disclosure, the ternary material has a chemical formula of LiNiₓCo_{y}M_{z}, where x+y+z=1 and M includes, but is not limited to, Mn, Al, Zr, Ti, Y, Sr or W. For example, the ternary material includes a nickel-cobalt-manganese ternary material (that is, NCM) or a nickel-cobalt-aluminum ternary material (that is, NCA). For example, the ternary material is a high-nickel ternary material, and x in LiNiₓCo_{y}M_{z} is greater than 0.6.

The phase change material has a single crystal structure or an aggregate structure, for example, an olivine structure. The phase change material has a chemical formula of LiAₓB_{y}PO₄, where x+y=1, A includes, but is not limited to, Fe, Co, Mn, Ni, Cr or V, and B includes, but is not limited to, Fe, Co, Mn, Ni, Cr or V. For example, the phase change material includes lithium manganese iron phosphate, lithium manganese vanadium phosphate, or lithium chromium iron phosphate. For example, the phase change material is lithium manganese iron phosphate (LMFP), with a structure of LiMnₓFe_{y}PO₄, where x is a value in the range of 0.05-0.95, and in another example, x is a value in the range of 0.5-0.85; and y is a value in the range of 0.05-0.95, and in another example, y is a value in the range of 0.15-0.5. In still another example, the phase change material has a single crystal structure.

In this embodiment, the phase change material undergoes a phase change between 4.0 V and 2.0 V when the phase change material is added to a slurry of a high-nickel material, a structural phase change of the high-nickel material at 4.25 V (relative to the potential of Li) can be weakened or delayed.

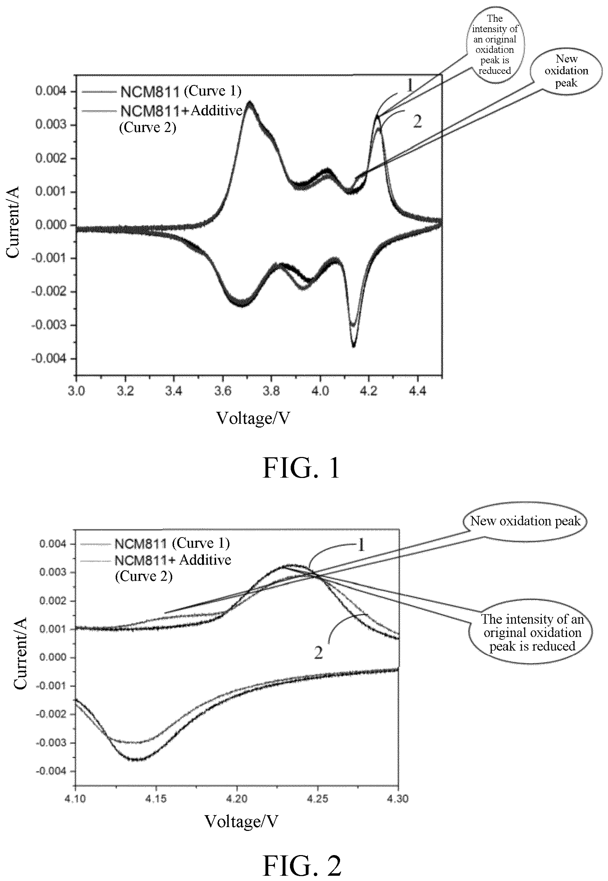

In an example, the ternary material is NCM811, and the phase change material is LMFP. CV curves of positive electrode plates manufactured therewith are shown in FIG. 1 and FIG. 2. FIG. 2 is a partially enlarged view of FIG. 1, where curve 1 represents the CV curve of NCM811, and curve 2 represents the CV curve of the mixed positive electrode material. It can be learned from FIG. 1 and FIG. 2 that, the CV curve of the electrode plate made of the mixed positive electrode material (NCM811+LMFP) has a new oxidation peak around 4.15 V, and a current intensity of an oxidation peak of the NCM811 material at around 4.25 V is reduced. This shows that mixing a particular amount of materials (such as lithium manganese iron phosphate, lithium manganese vanadium phosphate, or lithium chromium iron phosphate) that have a phase change between 4.0 V and 2.0 V, for example, between 3.95 V and 4.15 V, in the slurry of the high-nickel material can weaken or delay the structural phase change of the high-nickel material at 4.25 V (relative to the potential of Li).

Further, in the present disclosure, in order to better improve the cycle performance and safety performance of the battery, the ternary material adopts a single crystal structure. In this way, the cycle stability and safety performance of the battery can be improved by using the advantages of the ternary material of the single crystal structure including good high-temperature performance, less gas production and high safety.

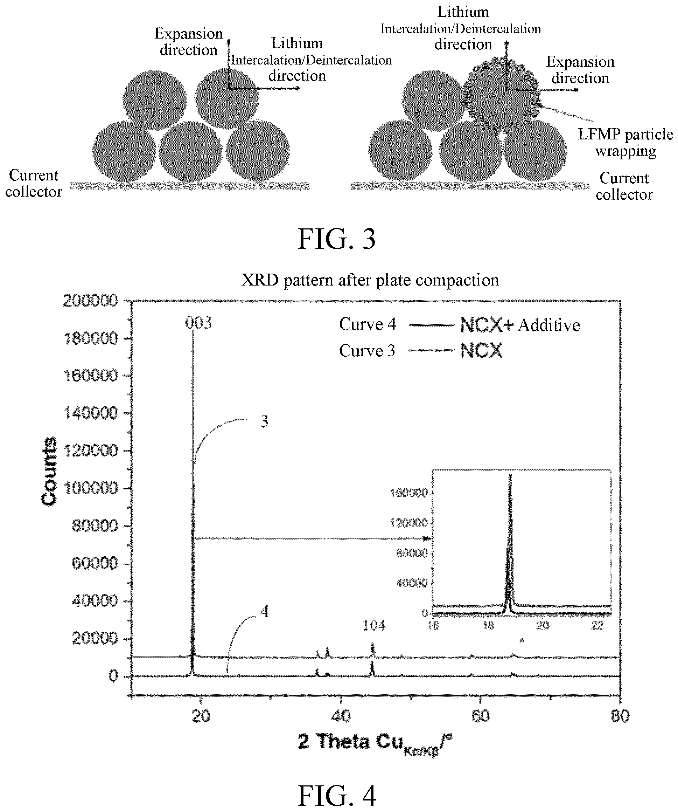

Further, because the ternary material is of the single crystal structure, and the ternary material of the single crystal structure has the characteristic of orientation in the direction of 003 crystallographic orientation after electrode plate compaction, as shown in FIG. 3, such orientation causes the expansion of the ternary material in a thickness direction, affecting the performance of the battery, causing the electrolyte solution to be unevenly distributed during charging/discharging of the battery, resulting in lithium plating, and leading to deterioration of the performance of the battery. To restrict the orientation of the ternary material of the single crystal structure in the direction of 003 crystallographic orientation, in the embodiments of the present disclosure, the nanohardness of the ternary material and that of the phase change material are defined. Exemplarily, the ternary material has a nanohardness of 0.001-5 Gpa, and the phase change material has a nanohardness of 0.01-10 Gpa. Exemplarily, the ternary material has a nanohardness of 0.2-1.4 Gpa, and the phase change material has a nanohardness of 1.5-3.5 GPa. In this way, the orientation of the ternary material of the single crystal structure in the direction of 003 crystallographic orientation can be restricted by defining the nanohardness of the ternary material and that of the phase change material, thereby reducing the expansion of the mixed positive electrode material and the electrode plate in the thickness direction, and improving the performance of the battery.

FIG. 4 shows XRD patterns of a conventional ternary material and a mixed positive electrode material according to an embodiment of the present disclosure after electrode plate compaction. Curve 3 represents the XRD pattern of the conventional ternary material after the electrode plate compaction. Curve 4 represents the XRD pattern of the mixed positive electrode material according to an embodiment of the present disclosure after the electrode plate compaction. As shown in FIG. 4, the XRD pattern of the mixed positive electrode material according to an embodiment of the present disclosure after the electrode plate compaction has a decreased intensity ratio of peak 003 to peak 110, compared with the intensity ratio of peak 003 to peak 110 in the XRD pattern of the conventional ternary material after the electrode plate compaction. This means that the orientation of the ternary material of the single crystal structure in the direction of 003 is suppressed. Exemplarily, in an embodiment of the present disclosure, the XRD pattern of the conventional ternary material after the electrode plate compaction has an intensity ratio of peak 003 to peak 110 in the range of 5-200, and the XRD pattern of the mixed positive electrode material according to an embodiment of the present disclosure after the electrode plate compaction has an intensity ratio of peak 003 to peak 110 in the range of 10-100.

Further, in this embodiment, the phase change material is a material such as LMFP and the LMFP has a low specific capacity, which affects the energy density of the battery. Therefore, in the embodiments of the present disclosure, the tap densities of the ternary material and the phase change material are defined, to achieve a higher compaction density of the electrode plate and ensure the energy density of the battery. Exemplarily, in an embodiment of the present disclosure, the ternary material has a tap density of 2.0-2.8 g/cm³, and the phase change material has a tap density of 0.8-1.5 g/cm³.

Further, in this embodiment, the ternary material has D50 of 3.0-6.0 µm, and primary particles in the phase change material have D50 of 10-50 nm.

Further, in this embodiment, the ternary material has D50 of 3.5-5.0 µm, and the primary particles in the phase change material have D50 of 20-40 nm. Further, in an embodiment of the present disclosure, in order to improve the safety performance of the mixed positive electrode material and the battery, a particular amount of lithium carbonate can be added to the slurry of the mixed positive electrode material. The lithium carbonate can produce a gas when the battery fails, which advances the reversal and valve opening time of a CID (circuit cut-off device) and an explosion-proof valve, thereby preventing the occurrence of more serious thermal runaway. Exemplarily, the content of lithium carbonate is 2-10% of the total mass of the mixed positive electrode material.

According to the mixed positive electrode material in the embodiments of the present disclosure, the ternary material of the single crystal structure is used. On the one hand, the ternary material of the single crystal result has advantages of good high-temperature performance, less gas production and high safety. On the other hand, by means of the phase change material, the phase change of the ternary material in the charging/discharging voltage range is slowed down or delayed and the capacity decrease caused by the phase change of the ternary material during long-term cycling is slowed down, thereby improving the cycle performance of the battery, reducing the impedance of the material during aging, and improving the safety performance of the battery.

Further, in the embodiments of the present disclosure, the orientation of the ternary material in the direction of 003 crystallographic orientation is restricted by defining the nanohardness of the ternary material and that of the phase change material, and a relatively high compaction density of the electrode plate is achieved by defining the tap densities of the ternary material and the phase change material, thereby ensuring the energy density of the battery.

In another aspect of the present disclosure, a positive electrode plate is further provided, which includes a current collector and the mixed positive electrode material according to the embodiments of the present disclosure provided on the current collector.

Exemplarily, the current collector is, for example, an aluminum foil.

Exemplarily, an intensity ratio of peak 003 to peak 110 in the XRD pattern after electrode plate compaction of the positive electrode plate is 10-100.

Due to the use of the mixed positive electrode material according to the embodiments of the present disclosure, the positive electrode plate according to the present disclosure has similar advantages, that is, it can improve the cycle performance of the battery, reduce the impedance of the material during aging, and improve the safety performance of the battery. It should be noted that, the features and advantages described above for the mixed positive electrode material are also applicable to the positive electrode plate, and details are not described herein again.

In another aspect of the present disclosure, a battery is also provided, which includes the positive electrode plate according to the embodiments of the present disclosure, a negative electrode plate, and a separator provided between the positive electrode plate and the negative electrode plate and an electrolyte solution.

Exemplarily, the positive electrode plate includes a current collector and the mixed positive electrode material according to the embodiments of the present disclosure provided on the current collector. Exemplarily, the positive electrode current collector includes an aluminum foil. The positive electrode current collector further includes a conductive agent and a binder. In an example, a mass ratio of the mixed positive electrode material to the binder to the conductive agent is 100:2.0:2.2.

Exemplarily, the ternary material in the mixed positive electrode material is a ternary material of a single crystal structure, for example, a nickel-cobalt-manganese ternary material (NCM) or a nickel-cobalt-aluminum ternary material (NCA). The phase change material is a phase change material with nanoscale primary particles, such as lithium manganese iron phosphate, lithium manganese vanadium phosphate or lithium chromium iron phosphate. The binder is PVDF (polyvinylidene fluoride) with special functional groups on the polymer chain. The special functional groups such as F-containing groups, and/or carboxyl groups, and/or ester groups, and/or amino groups are attached to the polymer chain of the PVDF in a modified manner. The F-containing groups on the polymer chain of the PVDF can improve gelation resistance of the binder. The carboxyl groups, and/or ester groups, and/or amino groups on the polymer chain of the PVDF can improve adhesive strength of the binder. The conductive agent is a combination of conductive agents including conductive carbon black, CNT and graphene. These conductive agents enable mutual conduction between points and points, points and lines, and lines and lines, to better form a complete conductive network. Because the two materials of the ternary material and the phase change material are respectively nanoscale and microscale, dotted, linear or even planar conductive agents are required to form the complete conductive network.

Exemplarily, the negative electrode plate includes a current collector and a negative electrode material provided on the current collector. Exemplarily, the negative electrode current collector includes a copper foil, and the negative electrode material is graphite, a binder, carboxymethyl cellulose (CMC) and a conductive agent. In an example, a mass ratio of graphite to the binder to the carboxymethyl cellulose (CMC) to the conductive agent is 100:1.9:1.6:1.2. Exemplarily, the graphite in the negative electrode material is artificial graphite with secondary particles coated with carbon. This is because the primary particles made of smaller secondary particles and then coated with carbon on the surfaces thereof can improve the electrical conductivity, which can improve the rate and low-temperature performance of the negative electrode plate and reduce the inherent expansion of the graphite.

Exemplarily, the electrolyte solution includes one or more of EC, DMC, EMC, DEC, VC, and PS, where EC is the abbreviation of ethylene carbonate; DMC is the abbreviation of dimethyl carbonate; EMC is the abbreviation of ethyl methyl carbonate; DEC is the abbreviation of diethyl carbonate; VC is the abbreviation of vinylene carbonate; and PS is the abbreviation of polystyrene.

Exemplarily, the separator has a composite structure composed of PE, ceramic, and glue.

Due to the use of the mixed positive electrode material according to the embodiments of the present disclosure, the battery according to the embodiments of the present disclosure has similar advantages, that is, it can improve the cycle performance of the battery, reduce the impedance of the material during aging, and improve the safety performance of the battery. It should be noted that, the features and advantages described above for the positive electrode material are also applicable to the battery, and details are not described herein again.

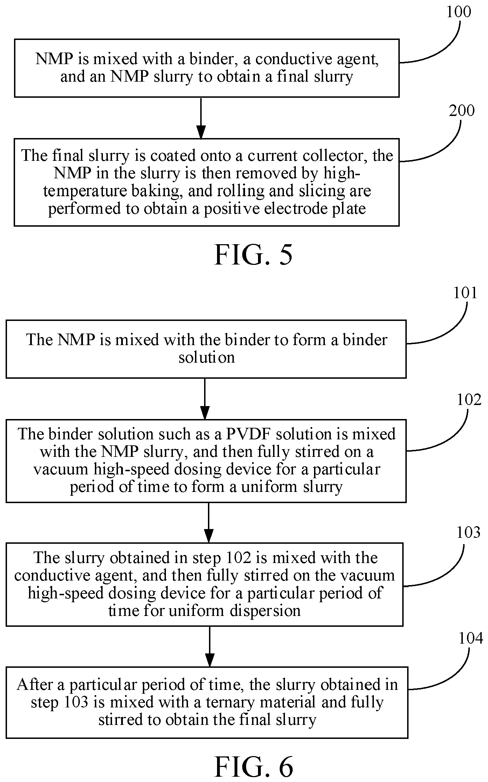

In another aspect of the present disclosure, a manufacturing method for the positive electrode plate according to the embodiments of the present disclosure is also provided, which, as shown in FIG. 5, includes the following step:
Step 100: NMP is mixed with a binder, a conductive agent, and an NMP slurry to obtain a final slurry.

Specifically, as shown in FIG. 6, step 100 is performed according to the following steps:
Step 101: The NMP is mixed with the binder to form a binder solution, that is, a dissolved binder. In an example, the binder is made of PVDF specially used for the ternary high-nickel material, such as PVDF with F-containing groups, and/or carboxyl groups, and/or ester groups, and/or amino groups on the polymer chain, that is, F-containing groups, and/or carboxyl groups, and/or ester groups, and/or amino groups are attached to the polymer chain of the PVDF in a modified manner. The F-containing groups on the polymer chain of the PVDF can improve gelation resistance of the binder. The carboxyl groups, and/or ester groups, and/or amino groups on the polymer chain of the PVDF can improve adhesive strength of the binder. The NMP (English name: N-methyl-2-pyrrolidone) can prevent the PVDF from agglomerating, the content of the NMP is determined according to needs, and no specific limitation is made herein.
Step 102: The binder solution such as a PVDF solution is mixed with the NMP slurry, and then fully stirred on a vacuum high-speed dosing device for a particular period of time to form a uniform slurry.

Exemplarily, a solid content of the NMP slurry is 30-40 wt%. The NMP slurry includes a phase change material, a dispersant, a stabilizer, and NMP, where NMP serves as a solvent, and the phase change material undergoes a phase change in the charging/discharging voltage range of the ternary material. For detailed description of the phase change material, refer to the above content, which is not repeated herein. The dispersant includes PVP or the like, or fatty acids, esters. The stabilizer includes ethyl acetate, salicylic acid.

Step 103: The slurry obtained in step 102 is mixed with the conductive agent, and then fully stirred on the vacuum high-speed dosing device for a particular period of time for uniform dispersion.

Exemplarily, the vacuum high-speed dosing device is, for example, a vacuum high-speed planetary disperser.

Exemplarily, the stirring time is, for example, 10-50 minutes.

Exemplarily, the conductive agent is a combination of conductive agents including conductive carbon black, CNT and graphene.

Step 104: After a particular period of time, the slurry obtained in step 103 is mixed with a ternary material and fully stirred to obtain the final slurry.

Exemplarily, after 10-50 minutes, for example, the ternary material is added to the slurry obtained in step 103 and fully stirred to obtain the final slurry. The ternary material is as described above and is not repeated herein.

Step 200: The final slurry is coated onto a current collector, the NMP in the slurry is then removed by high-temperature baking, and rolling and slicing are performed to obtain a positive electrode plate.

Exemplarily, the ternary material has a nanohardness of 0.001-5 Gpa, and the phase change material has a nanohardness of 0.01-10 GPa. In another example, the ternary material has a nanohardness of 0.2-1.4 Gpa, and the phase change material has a nanohardness of 1.5-3.5 GPa. In still another example, the ternary material has a tap density of 2.0-2.8 g/cm³, and the phase change material has a tap density of 0.8-1.5 g/cm³.

Exemplarily, the ternary material has D50 of 3.0-6.0 µm. In an example, the ternary material has D50 of 3.5-5.0 nm. Primary particles in the phase change material have D50 of 10-50 nm. In an example, the primary particles in the phase change material have D50 of 20-40 nm.

Exemplarily, the NMP, the binder, the conductive agent material, and the NMP slurry are mixed with lithium carbonate to obtain the final slurry. That is, before the final slurry is obtained, lithium carbonate is added to the slurry containing the conductive agent and the ternary material and obtained in step 130 to improve safety performance of the battery and the mixed positive electrode material.

In the present disclosure, experimental tests are also performed on the battery and the positive electrode plate prepared by the above method to verify the performance of the battery.

### Specific experiments

For the positive electrode plate: A positive electrode slurry includes a mixed positive electrode material, a binder, and a conductive agent. A mass ratio of the mixed positive electrode material to the binder to the conductive agent is 100:2.0:2.2. The mixed positive electrode material includes a ternary material of a single crystal structure and an LMFP material with nanoscale primary particles. The binder is PVDF with special functional groups on the polymer chain. The conductive agent is a combination of conductive agents including conductive carbon black, CNT and graphene.

For the negative electrode plate: A mass ratio of graphite, a binder, CMC, and a conductive agent is 100:1.9:1.6:1.2. A negative electrode graphite is artificial graphite with secondary particles coated with carbon.

The electrolyte solution includes a mixed solution of EC, DMC, EMC, DEC, VC, and PS.

The separator includes PE, ceramic and glue.

Experiment procedure:
The composition and weight percentages of the above positive electrode slurry in this experiment are as follows: PVDF5130: 2.1%; the conductive agent: 1.9%; lithium manganese iron phosphate: 1%; and the high-nickel positive electrode material (Ni83): 95%. The production process includes: First, PVDF is dissolved with NMP, and then an NMP slurry (where the NMP slurry includes lithium manganese iron phosphate, PVP, ethyl acetate and NMP, and its solid content (the solid content of the slurry) is 33 wt%) is added and fully stirred on a vacuum high-speed dosing device for a particular period of time to form a uniform slurry. Then the conductive agent is added and fully stirred on the vacuum high-speed dosing device for a particular period of time for uniform dispersion. Finally, a high-nickel positive electrode material is added. The mass ratio of the ternary material, PVDF, lithium manganese iron phosphate (LMFP) and the conductive agent in the positive electrode slurry is 100:2.2:1:2.

The experimental parameters and performance test results are shown in Table 1 and Table 2 below.

**Table 1. Experimental parameters and performance parameters in the embodiment**

| Experiment No. | Material | Mass percentage (%) | Particle size D50 (NCM-µm (D50), LFMP-nm (D50 of primary particles)) | Tap density (g/dm³) | Nanohardness | Intensity ratio of peak 003 to peak 110 in the XRD pattern after electrode plate compaction of the positive electrode plate | Compaction density (g/cm³) of the positive electrode plate | 45°C-C500/% | 60°C-28D, battery hickness change rate/% | Rate (5C/0.2C discharge rate) | Low temperature (-20°C/25°C) discharge rate |
|---|---|---|---|---|---|---|---|---|---|---|---|
| 1 | NCM | 95 | 4.5 | 2.5 | 0.8 | 24 | 3.4 | 91 | 7% | 90% | 75% |
| | LMFP | 5 | 10 | 1.2 | 2.5 | | | | | | |
| 2 | NCM | 80 | 4.5 | 2.5 | 0.8 | 15 | 3.3 | 91 | 8% | 93% | 84% |
| | LMFP | 20 | 30 | 1.2 | 2.5 | | | | | | |
| 3 | NCM | 70 | 4.5 | 2.5 | 0.8 | 12 | 3.2 | 90 | 7% | 89% | 80% |
| | LMFP | 30 | 30 | 1.2 | 2.5 | | | | | | |
| 4 | NCM | 95 | 4.5 | 2.5 | 0.8 | 13.5 | 3.6 | 93 | 6% | 95% | 85% |
| | LMFP | 5 | 30 | 1.2 | 2.5 | | | | | | |
| 5 | NCM | 98 | 4.5 | 2.5 | 0.8 | 15 | 3.6 | 92 | 7% | 92% | 81% |
| | LMFP | 2 | 30 | 1.2 | 2.5 | | | | | | |
| 6 | NCM | 95 | 4.5 | 2.5 | 0.8 | 27 | 3.5 | 90 | 7% | 89% | 80% |
| | LMFP | 5 | 50 | 1.2 | 2.5 | | | | | | |
| 7 | NCM | 95 | 6 | 2.5 | 0.8 | 15 | 3.5 | 91 | 8% | 88% | 78% |
| | LMFP | 5 | 30 | 1.2 | 2.5 | | | | | | |
| 8 | NCM | 95 | 3 | 2.5 | 0.8 | 25 | 3.2 | 88 | 11% | 92% | 81% |
| | LMFP | 5 | 30 | 1.2 | 2.5 | | | | | | |
| 9 | NCM | 95 | 4.5 | 2.5 | 0.8 | 21 | 3.4 | 90 | 10% | 89% | 78% |
| | LMFP | 5 | 30 | 1.2 | 1.5 | | | | | | |
| 10 | NCM | 95 | 4.5 | 2.5 | 0.8 | 24 | 3.4 | 89 | 13% | 91% | 74% |
| | LMFP | 5 | 30 | 1.2 | 3.5 | | | | | | |
| 11 | NCM | 95 | 4.5 | 2.5 | 0.2 | 27 | 3.4 | 91 | 11% | 88% | 79% |
| | LMFP | 5 | 30 | 1.2 | 2.5 | | | | | | |
| 12 | NCM | 95 | 4.5 | 2.5 | 1.4 | 28 | 3.4 | 90 | 12% | 90% | 74% |
| | LMFP | 5 | 30 | 1.2 | 2.5 | | | | | | |
| 13 | NCM | 95 | 4.5 | 2.8 | 0.8 | 18 | 3.65 | 92 | 6% | 93% | 83% |
| | LMFP | 5 | 30 | 1.2 | 2.5 | | | | | | |
| 14 | NCM | 95 | 4.5 | 2 | 0.8 | 19 | 3.55 | 93 | 8% | 94% | 84% |
| | LMFP | 5 | 30 | 1.2 | 2.5 | | | | | | |
| 15 | NCM | 95 | 4.5 | 2.5 | 0.8 | 15 | 3.51 | 91 | 7% | 92% | 85% |
| | LMFP | 5 | 30 | 0.8 | 2.5 | | | | | | |
| 16 | NCM | 95 | 4.5 | 2.5 | 0.8 | 17 | 3.62 | 92 | 6% | 93% | 83% |
| | LMFP | 5 | 30 | 1.5 | 2.5 | | | | | | |
| 17 | NCM | 95 | 4.5 | 2.5 | 0.05 | 29 | 3.6 | 89 | 10% | 92% | 80% |
| | LMFP | 5 | 30 | 1.2 | 2.5 | | | | | | |
| 18 | NCM | 95 | 4.5 | 2.5 | 4.5 | 18 | 3.52 | 91 | 6% | 90% | 81% |
| | LMFP | 5 | 30 | 1.2 | 7.5 | | | | | | |
| 19 | NCM | 95 | 4.5 | 2.5 | 0.8 | 28 | 3.63 | 90 | 7% | 91% | 82% |
| | LMFP | 5 | 30 | 1.2 | 1 | | | | | | |
| 20 | NCM | 95 | 4.5 | 2.5 | 0.8 | 25 | 3.62 | 88 | 9% | 93% | 84% |
| | LMFP | 5 | 30 | 1.2 | 8.1 | | | | | | |
| 21 | NCM | 95 | 4.5 | 2.9 | 0.8 | 20 | 3.43 | 87 | 10% | 85% | 78% |
| | LMFP | 5 | 30 | 0.7 | 2.5 | | | | | | |
| 22 | NCM | 95 | 4.5 | 1.9 | 0.8 | 21 | 3.42 | 88 | 11% | 84% | 77% |
| | LMFP | 5 | 30 | 1.6 | 2.5 | | | | | | |

**Table 2. Experimental parameters and performance parameters in the comparative examples**

| Experiment No. | Material | Mass percentage (%) | Particle size D50 (NCM-µm (D50), LFMP-nm (D50 of primary particles)) | Tap density (g/dm³) | Nanohardness (Gpa) | Intensity ratio of peak 003 to peak 110 in the XRD pattern after electrode plate compaction of the positive electrode plate | Compaction density (g/cm³) of the positive electrode plate | 45°C-C500 | 60°C-28D, battery thickness change rate/% | Rate (5C/0.2C discharge rate) | Low temperature (-20°C/25°C) discharge rate |
|---|---|---|---|---|---|---|---|---|---|---|---|
| 1 | NCM | 100 | 4.5 | 2.5 | 0.8 | 120 | 3.6 | 78 | 13% | 88% | 78% |
| 2 | LFMP | 100 | 30 | 1.2 | 2.5 | No orientation | 2.5 | 76 | 8% | 75% | 60% |
| 3 | NCM | 60 | 4.5 | 2.5 | 0.8 | 13.5 | 3.4 | 80 | 10% | 78% | 65% |
| | LFMP | 40 | 30 | 1.2 | 2.5 | | | | | | |
| 4 | NCM | 95 | 18 | 2.5 | 0.8 | 7.5 | 3.5 | 75 | 20% | 89% | 80% |
| | LFMP | 5 | 30 | 1.2 | 2.5 | | | | | | |
| 5 | NCM | 95 | 7 | 2.5 | 0.8 | 15 | 3.5 | 86 | 9% | 74% | 63% |
| | LFMP | 5 | 30 | 1.2 | 2.5 | | | | | | |
| 6 | NCM | 95 | 2 | 2.5 | 0.8 | 12 | 3.1 | 76 | 16% | 88% | 79% |
| | LFMP | 5 | 30 | 1.2 | 2.5 | | | | | | |
| 7 | NCM | 95 | 4.5 | 2.5 | 0.8 | 17 | 3.4 | 84 | 9% | 65% | 60% |
| | LFMP | 5 | 100 | 1.2 | 2.5 | | | | | | |
| 8 | NCM | 95 | 4.5 | 2.5 | 0.8 | 120 | 3 | 78 | 10% | 84% | 78% |
| | LFMP | 5 | 5 | 1.2 | 2.5 | | | | | | |
| 9 | NCM | 95 | 4.5 | 2.5 | 0.0001 | 140 | 3.62 | 78 | 22% | 89% | 79% |
| | LFMP | 5 | 30 | 1.2 | 2.5 | | | | | | |
| 10 | NCM | 95 | 4.5 | 2.5 | 6 | 135 | 3.51 | 86 | 10% | 86% | 79% |
| | LFMP | 5 | 30 | 1.2 | 2.5 | | | | | | |
| 11 | NCM | 95 | 4.5 | 2.5 | 0.8 | 130 | 3.56 | 78 | 15% | 89% | 80% |
| | LFMP | 5 | 30 | 1.2 | 12 | | | | | | |

The explanation of the parameters in the above table and performance test methods are as follows:
Intensity ratio of peak 003 to peak 110 in the XRD pattern after electrode plate compaction of the positive electrode plate: The intensity ratio of peak 003 to peak 110 in the XRD pattern after electrode plate compaction of the positive electrode plate made of a positive electrode material with no phase change material added ranges from 5 to 200. The intensity ratio of peak 003 to peak 110 in the XRD pattern after electrode plate compaction of the positive electrode plate made of a positive electrode material with a phase change material added ranges from 10 to 100.

Electrode plate compaction density: The compaction density of the ternary material is generally above 3.0 g/dm³, and the compaction density generally does not exceed 3.8 g/dm³ due to the limitation of the process and the possibility that the material may be crushed.

45°C-C500: This refers to a capacity retention rate of the battery after 500 cycles at 45°C. The upper limit of this range is 100% without decrease. There may also be a sudden drop during the cycle process of the battery, and in this case, the capacity retention rate is very low, below 50%.

60°C-28D: Thickness change rate/% of battery at 60°C for 28 days: This parameter is mainly provided for evaluating gas production of the battery. This change rate is preferably 0, that is, no gas is produced in the battery. If the battery produces a large amount of gas, the change rate may exceed 100%.

Rate (ratio of discharge capacity at 5C to that at 0.2C): This parameter is provided for evaluating the discharge capacity of the battery at a high current, and this value is generally in the range of 50%-98%.

Discharge rate at low temperature (-20°C/25°C): This parameter is provided for evaluating the discharge capacity of the battery at a low temperature, and this value fluctuates greatly depending on the battery, which can be 5%-90%.

### Test methods and results in the above experiments

Particle size: (1) Test equipment: Laser particle size analyzer, reference model Malvern 2000/3000.

(2) Test method: Dispersion is performed in deionized water, and sonication is performed for 10 min; particle refractive index: 1.74; and data such as D0.01, D10, D50, D90, and D99 in the volume distribution and raw data are required.

Tap density: The tap density is tested by Dandong Bettersize (BT-1001) intelligent powder comprehensive tester. The powder is placed in a measuring cylinder of 100 ml, and weighed. The measuring cylinder is vibrated on the tester for 300 times at a vibration frequency of 300 times/min. The volume of the powder in the measuring cylinder is measured after the vibration is over. According to the weight and volume of the powder, the tap density is calculated.

Nanohardness: The nanohardness is tested by a nanoindenter, which controls continuous load changes by a computer and monitors an indentation depth online. A complete indentation process includes two steps, that is, a loading process and an unloading process. During the loading process, an external load is applied to an indenter to press it into a surface of a sample. As the load increases, the depth of the indenter into the sample increases accordingly. When the load reaches the maximum, the external load is removed. There is a residual indentation mark on the surface of the sample. The nanohardness is calculated according to the applied pressure and an area of the indentation mark. The nanohardness is related to a selected crystal plane.

The intensity ratio of peak 003 to peak 110 in the XRD pattern after electrode plate compaction of the positive electrode plate is measured according to JY/T 009-1996 General rules for X-ray polycrystalline diffraction methods.

Electrode plate compaction density: A positive electrode plate without compaction is manufactured into a size of 40 mm * 100 mm, and compacted by Ono compacting machine. The electrode plate compaction density is calculated according to the areal density and the thickness after compaction of the electrode plate.

45°C-C500: Test method: temperature condition: 45±5°C; charge: 1C constant current charge to 4.2 V; and discharge: 1C constant current discharge to 2.5 V The capacity retention rate after 500 cycles, that is, C500, is calculated with the discharge capacity C1 of the first cycle as a reference.

60°C-28D, battery thickness change rate/%: The battery is charged to 4.2 V at a constant current of 0.2C, and placed at room temperature for 2 hours. An initial thickness of the battery is recorded. The battery is stored in a constant-temperature cabinet at 60°C for 28 days, and the thickness after storage is recorded. The thickness change is calculated.

Rate (5C/0.2C discharge rate): At 25°C, charging is performed: 0.2C constant current charging to 4.2 V; and discharging is performed: constant current discharging to 2.5 V at different rates of 0.2C and 5C. The ratio of 0.2C to 5C discharge capacities is calculated.

Low temperature (-20°C/25°C) discharge rate: Storage is performed in a constant-temperature box for 6 h at 25°C and 12 h at -20°C. At room temperature 25°C, 0.2C constant current charging is performed to 4.2 V/cell. Discharging is performed to 2.5 V/cell at a constant current of 1/3C under the temperature conditions of 25°C and -20°C. The ratio of the discharge capacity at -20°C to that at 25°C is calculated.

In the above table, mixed positive electrode materials, positive electrode slurries, and positive electrode plates in Embodiments 1-22 all have relatively excellent performance. Specifically, in terms of the orientation of compacted electrode plate after the mixed positive electrode material is prepared into a positive electrode plate, a greater ratio of intensities of peak 003 and peak 110 indicates a higher degree of orientation of the positive electrode material, and a more obvious orientation of the C-axis of the positive electrode material is perpendicular to the current collector. A smaller ratio indicates a lower degree of orientation of the C-axis of the positive electrode material is perpendicular to the current collector, the distribution of a layered structure thereof is irregular, which is more conducive to slowing down a thickness change of the electrode plate caused by the contraction and expansion of a unit cell volume during the charging and discharging process. A ratio of intensities of peak 004 and peak 110 can reach a minimum of 12 and a maximum of only 29, indicating weak orientation of the mixed positive electrode material prepared in the embodiments, which is conducive to slowing down the degree of expansion of the electrode plate during charging and discharging. In terms of the compaction density of the mixed positive electrode material after the electrode plate is prepared therewith, a higher compaction density indicates a more conducive condition for the improvement of the energy density of the battery, a lower compaction density indicates a more adverse condition for the performance of the energy density of the battery. The highest compaction density of the positive electrode plate in the embodiments can reach 3.65 g/cm³, indicating that the positive electrode plate has a relatively high compaction density, mainly because the mixed positive electrode material has a relatively high tap density and there is a particle size difference between the two composite materials, which is conducive to the close packing of particles in the positive electrode plate. After a battery is prepared with the positive electrode mixed material, the capacity retention rate after 500 cycles at 45°C, the thickness change rate after storage at 60°C for 28D, the rate performance and the low-temperature discharge performance of the battery are mainly related to the particle size of NCM in the mixed positive electrode material, the particle size of the phase change material, and the mass ratio of the ternary material to the phase change material in the mixed positive electrode material. Within the scope provided in this patent, a larger particle size of NCM in the mixed positive electrode material indicates a larger particle size of the phase change material thereof, a lowered degree of side reaction between the mixed positive electrode material and the electrolyte solution, a smaller amount of gas production in the mixed positive electrode material, a smaller amount of dissolved Mn in the phase change material, better cycle performance thereof, and a smaller change rate of the thickness of the battery after storage. Moreover, due to the increase of the particle size, a diffusion path of lithium ions becomes longer, and the rate performance and low-temperature performance of the battery deteriorate. A capacity retention rate of the mixed positive electrode material in the embodiments after 500 cycles at 45°C is 93% at the highest and 87% at the lowest. After storage at 60°C for 28D, the change rate of the thickness of the battery is 6% at the lowest and 13% at the highest, indicating that the mixed positive electrode material has good high-temperature performance. The 5C multiplier discharge rate is 95% at the highest and 84% at the lowest. The discharge rate at a low temperature of -20°C is 85% at the highest and can reach 74% at the lowest, indicating that the mixed positive electrode material has good low-temperature performance and rate performance.

In Comparative Example 1, no phase change material is added to the ternary material, and the crystal orientation of the positive electrode plate is not suppressed during electrode plate compaction. The expansion and contraction of the electrode plate of the ternary material during the charging/discharging process causes uneven distribution of the electrolyte solution inside the battery, leading to lithium plating inside the battery and deteriorated cycle performance of the battery.

In Comparative Example 2, the LMFP material (with no ternary material added) has a low electrode plate compaction density and low energy density. In addition, the material has dissolution of Mn during the cycle, making the cycle performance of the battery deteriorate. Moreover, due to characteristics of the material, a diffusion coefficient of lithium ions is low, resulting in poor low-temperature and rate performance thereof.

In Comparative Example 3, the proportion of the LMFP material in the mixed positive electrode material is too large, and ionic conductivity of the LMFP material is very low, resulting in poor low-temperature and rate performance of the battery, and a decrease in the compaction density of the electrode plate.

In Comparative Example 4, the particle size of the NCM material in the mixed positive electrode material is too large, which cannot exist in the form of a single crystal structure and can only be made into an aggregate structure. The material of the aggregate structure has poor high-temperature cycle performance, and high gas production after high-temperature storage.

In Comparative Example 5, the particle size of NCM in the mixed positive electrode material is too large, resulting in deteriorated low-temperature and rate performances thereof.

In Comparative Example 6, the particle size of NCM in the mixed positive electrode material is too small, a specific surface area of NCM increases, the side reaction with the electrolyte solution increases, the high-temperature performance of the battery deteriorates, and the gas production of the battery after high-temperature storage increases.

In Comparative Example 7, the particle size of LMFP in the mixed positive electrode material is too large, resulting in poor low-temperature performance and rate performance thereof, and affecting the compaction density of the electrode plate.

In Comparative Example 8, the particle size of LMFP in the mixed positive electrode material is too small, the amount of dissolved Mn increases, the compaction density of the electrode plate decreases, and the high-temperature cycle performance deteriorates.

In Comparative Example 9, the nanohardness of the NCM material in the mixed positive electrode material is too low, and the NCM material is preferentially compacted after electrode plate compaction. Because the orientation of the crystal cannot be suppressed, and the nanohardness is too low, after the electrode plate compaction, the particles are easily broken, causing exposure of large fresh surfaces to the electrolyte solution, increasing side reactions, and causing the cycle performance of the material to deteriorate.

In Comparative Example 10, the nanohardness of the NCM material in the mixed positive electrode material is higher than that of the coating layer material LMFP, which also does not inhibit the orientation of body crystal thereof, causing the cycle performance of the battery to deteriorate.

In Comparative Example 11, the nanohardness of LMFP in the mixed positive electrode material is too high, and the LMFP material is also a nano-particle material. During electrode plate compaction, the nano-material enters NCM, and the LMFP cannot inhibit the orientation of the crystal thereof. In addition, the surface of the NCM material is damaged, and the cycle performance of the battery deteriorates.

Although exemplary embodiments have been described with reference to the accompanying drawings, it should be understood that the above exemplary embodiments are only illustrative, and not intended to limit the scope of the present disclosure thereto. Various changes and modifications can be made by those of ordinary skill in the art without departing from the scope and spirit of the present disclosure. All these changes and modifications are intended to be embraced in the scope of the present disclosure as defined in the appended claims.

## Claims

1. A mixed positive electrode material, comprising: a ternary material and a phase change material, wherein the phase change material undergoes a phase change in a charging/discharging voltage range of the ternary material, the ternary material has a single crystal structure, and the phase change material has a single crystal structure or an aggregate structure;
a mass fraction ratio of the ternary material to the phase change material is 70:30 to 99.8:0.2;
the ternary material has a nanohardness of 0.001 Gpa-5 Gpa, and the phase change material has a nanohardness of 0.01 GPa-10 GPa; and
the ternary material has a D50 of 3.0 µm-6.0 µm, and primary particles in the phase change material have a D50 of 10 nm-50 nm.

2. The mixed positive electrode material according to claim 1, wherein the ternary material has a nanohardness of 0.2 GPa -1.4 GPa, and the phase change material has a nanohardness of 1.5 GPa -3.5 GPa.

3. The mixed positive electrode material according to claim 1 or 2, wherein the ternary material has a tap density of 2.0 g/cm³-2.8 g/cm³, and the phase change material has a tap density of 0.8 g/cm³-1.5 g/cm³.

4. The mixed positive electrode material according to any one of claims 1-3, wherein the ternary material has a D50 of 3.5 µm-5.0 µm, and the primary particles in the phase change material have a D50 of 20 nm-40 nm.

5. The mixed positive electrode material according to any one of claims 1-4, wherein the ternary material has a chemical formula of LiNiₓCo_{y}M_{z}, wherein x+y+z=1, and M comprises Mn, Al, Zr, Ti, Y, Sr or W.

6. The mixed positive electrode material according to any one of claims 1-5, wherein the ternary material comprises a nickel-cobalt-manganese ternary material or a nickel-cobalt-aluminum ternary material.

7. The mixed positive electrode material according to any one of claims 1-6, wherein the phase change material has an olivine structure, and the phase change material has a chemical formula of LiAₓB_{y}PO₄, wherein x+y=1, A comprises Fe, Co, Mn, Ni, Cr or V, and B comprises Fe, Co, Mn, Ni, Cr or V.

8. The mixed positive electrode material according to any one of claims 1-7, wherein the phase change material comprises lithium manganese iron phosphate, lithium manganese vanadium phosphate, or lithium chromium iron phosphate.

9. A positive electrode plate, comprising a current collector and the mixed positive electrode material according to any one of claims 1-8 provided on the current collector.

10. The positive electrode plate according to claim 9, wherein an intensity ratio of peak 003 to peak 110 in an XRD pattern after compaction of the positive electrode plate is 10 to 100.

11. A manufacturing method for the positive electrode plate according to claim 9 or 10, comprising:
mixing NMP with a binder, a conductive agent, and an NMP slurry to obtain a final slurry, wherein the NMP slurry comprises a phase change material, a dispersant, a stabilizer, and NMP, the phase change material undergoes a phase change in a charging/discharging voltage range of the ternary material, the ternary material has a nanohardness of 0.001 GPa -5 Gpa, the phase change material has a nanohardness of 0.01 GPa-10 GPa, the ternary material has D50 of 3.0 µm -6.0 µm, and primary particles in the phase change material have D50 of 10 nm-50 nm; and
coating the final slurry onto the current collector, removing the NMP in the final slurry by high-temperature baking, and rolling and slicing to obtain the positive electrode plate.

12. The method according to claim 11, wherein a solid content of the NMP slurry is 30 wt%-40 wt%.

13. The method according to claim 11 or 12, wherein mixing the NMP, the binder, the conductive agent material, and the NMP slurry with lithium carbonate to obtain the final slurry.

14. A battery, comprising: the positive electrode plate according to claim 9 or 10, a negative electrode plate, and a separator provided between the positive electrode plate and the negative electrode plate and an electrolyte solution.
